# EUROPEAN PATENT APPLICATION

(11) **EP 1 954 019 A1**
(43) Date of publication of application: **06.08.2008**
(21) Application number: 07101596.0
(22) Date of filing: 01.02.2007
(51) Int. Cl.: H04M 3/56, H04S 1/00, H04L 12/18, H04Q 7/38

(54) **System and method for providing simulated spatial sound in a wireless communication device during group voice communication sessions**

(71) Applicant: Research In Motion Limited, Waterloo, Ontario N2L 3W8 (CA)
(72) Inventor: Mak-Fan, David, Waterloo Ontario N2K 4B1 (CA)
(74) Representative: Rickard, David John

(57) **Abstract**

A system and method for providing simulated spatial sound in group voice communication sessions on a wireless communication device is provided. The wireless communication device is one of two or more in the system which are operatively connected to a wireless communications network. The wireless communication device comprises: a processor for controlling the operation of the wireless communication device; a communications subsystem operatively connected to the processor for communicating with the wireless communications network; a memory operatively connected to the processor; an audio input device operatively connected to the processor; a stereo audio output device operatively connected to the processor; a control module stored in the memory for execution by the processor to perform spatial sound simulation, the control module configuring the wireless communication device to: receive an audio input from a user of the wireless communication device; generate audio data packets from the audio input received from the user and transmit the audio data packets over the wireless communications network; receive spatial audio data packets; and reproduce the spatial audio data contained in the spatial audio data packets using the stereo audio output device.

## Description

The present application relates generally to group communication sessions, and more particularly to a system and method for providing simulated spatial sound in group voice communication sessions on a wireless communication device.

Users of wireless communication devices who wish to have group voice communications sessions with other users, such as conference calls for example, may encounter difficulties in differentiating between the voices of participants in the group voice communication session, particularly when the reception is poor or if there is significant background nose. Third party conference calling facilitators exist, but do little to alleviate the disadvantages associated with conferencing calling when using a wireless communication device.

Accordingly, there exists a need for improved systems and methods for conducting group voice communication sessions that assists the user of the wireless communication device in differentiating between the voices of participants.

### GENERAL

In accordance with one embodiment of the present application, there may be provided a system for providing simulated spatial sound on a wireless communication device. The wireless communication device may be one of two or more wireless communication devices operatively connected to a wireless communications network and engaged in a group voice communication session. The wireless communication device may comprise a processor for controlling the operation of the wireless communication device; a communications subsystem operatively connected to the processor for communicating with the wireless communications network; a memory operatively connected to the processor; an audio input device operatively connected to the processor; a stereo audio output device operatively connected to the processor; and a control module stored in the memory for execution by the processor to perform spatial sound simulation. The control module may configure the wireless communication device to: receive an audio input from a user of the wireless communication device; generate audio data packets from the audio input received from the user and transmit the audio data packets over the wireless communications network; receive spatial audio data packets; and reproduce the spatial audio data contained in the spatial audio data packets using the stereo audio output device.

In accordance with another embodiment of the present application, there may be provided a method for providing simulated spatial sound on a wireless communication device. The wireless communication device may be one of two or more wireless communication devices operatively connected to a wireless communications network and engaged in a group voice communication session. The method may comprise the steps of: determining a number of participants in the group voice communication session; for each of the participants, determining a virtual spatial position for each of the other participants in the group voice communication session; for each of the participants, generating simulated spatial audio data from the source audio data of the other participants in the group voice communication session and the virtual spatial position determined for the respective participant using a spatial sound simulating algorithm; and reproducing the simulated spatial audio data using a stereo audio output device of the wireless communication device.

In accordance with another embodiment of the present application, there may be provided a system for providing simulated spatial sound on a wireless communication device. The wireless communication device may be one of two or more wireless communication devices engaged in a group voice communication session. The wireless communication device may comprise a microprocessor for controlling the operation of the wireless communication device; an audio input device coupled to the microprocessor for accepting an input from a user of the wireless communication device; a stereo audio output device coupled to the microprocessor for communicating an output to the user; a communications subsystem coupled to the microprocessor for communicating with the other wireless communication devices engaged in the group voice communication system; a memory coupled to the microprocessor; and a control module stored in the memory for execution by the processor to facilitate spatial sound simulation. The control module may configure the wireless communication device to: receive an audio input from a user of the wireless communication device; generate audio data packets from the audio input received from the user and transmit the audio data packets to the other wireless communication devices engaged in the group voice communication; receive spatial audio data packets; and reproduce the spatial audio data contained in the spatial audio data packets using the stereo audio output device.

In accordance with another embodiment of the present application, there may be provided a method for providing simulated spatial sound on a wireless communication device. The wireless communication device may be one of two or more wireless communication devices engaged in a group voice communication session. The method may comprise the steps of: determining a number of participants in the group voice communication session; for each of the participants, determining a virtual spatial position for each of the other participants in the group voice communication session; for each of the participants, generating simulated spatial audio data from source audio data of the other participants in the group voice communication session and the virtual spatial position determined for the respective participant using a spatial sound simulating algorithm; and reproducing the simulated spatial audio data using a stereo audio output device of the wireless communication device.

### BRIEF DESCRIPTION OF THE DRAWINGS

FIG. 1 is a schematic diagram of a wireless communication device suitable for engaging in a conference call in accordance with one embodiment of the present application;

FIG. 2 is schematic diagram of a communication system suitable for providing simulated spatial sound in a group voice communication session on the wireless communication device of FIG. 1 in accordance with one embodiment of the present application;

FIG. 3 is a block diagram of the contents of a memory of the wireless communication device of FIG. 1;

FIG. 4 is a front view illustrating the wireless communication device of FIG. 1;

FIG. 5 is a flowchart illustrating a method for providing simulated spatial sound in a group voice communication session in accordance with one embodiment of the present application;

FIG. 6 is a flowchart illustrating a method for providing simulated spatial sound in a group voice communication session in accordance with another embodiment of the present application;

FIG. 7 is a block diagram of an audio data packet received from a wireless communication device in accordance with one embodiment of the present application;

FIG. 8 is a series of diagrams illustrating example spatial sound positioning of participants in a group voice communication session in accordance with one embodiment of the present application;

FIG. 9 is in block diagram form an audio processing circuit in accordance with one embodiment of the present application; and

FIG. 10 is a series of diagrams illustrating another example of spatial sound positioning of participants in a group voice communication session for use with the method shown in FIG. 5.

It will be noted that throughout the appended drawings, like features are identified by like reference numerals.

### DESCRIPTION OF PREFERRED EMBODIMENTS

Binaural audio (sometimes referred to as spatial audio) is related to how sound is perceived and how the placement of a sound source is determined by the brain when a sound wave arrives at both ears. In a binaural audio recording, this effect is created using a pair of microphones positioned at each ear of an artificial head shaped to closely resemble that of a human head. Placement of the microphones in the artificial head allows the sound recording to approximate the sound that would be heard by a listener at the location of the artificial head by taking into account how the differences in sound are affected by the shape and position of the head and ears relative to one another and the sound waves. In contrast to a binaural recording, a conventional two-channel stereo recording uses a pair of microphones strategically placed at locations relative to the sound source.

Both stereo and binaural recordings have two recorded channels which, although similar, each contain distinct time-of-arrival and sound-pressure-level information. During playback, the listener's brain uses those subtle differences in timing and sound-level to triangulate the positions of the recorded objects. However, conventional stereo recordings do not factor in natural crossfeed or sonic shaping of the head and ear, since these things happen naturally as a person listens, generating his or her own ITDs (interaural time differences) and ILDs (interaural level differences). When a binaural recording is played through stereo headphones, each channel is presented independently without mixing or crosstalk. Thus, each of the listener's eardrums is provided with a replica of the auditory signal it would have experienced at the recording location. In this way binaural audio reproduces the auditory sensation of being present at the recording location much better than conventional stereo recordings.

True binaural recordings require wearing headphones to isolate each eardrum from the signal being delivered to the other eardrum. When a binaural signal is reproduced using stereo speakers, sound wave interference and cancellation distorts the signal. This effect may be reduced such that it roughly approximates a binaural recording by controlling the listener's position relative to the speakers. Transaural audio is a technique that may be used to deliver binaural signals to the ears of a listener using stereo speakers. Transaural audio filters binaural signals such that the subsequent stereo reproduction produces the binaural signal at the ears of the listener.

Digital Signal Processing (DSP) has been used to simulate the binaural effect by treating a monaural source signal with a pair of Head-Related Transfer Functions (HRTFs). This process is commonly referred to as binaural audio synthesis, but is sometimes referred to as spatial audio synthesis or binaural spatial synthesis. Binaural audio synthesis has been used in limited applications, mostly in relation to video gaming and military aircraft piloting. Binaural audio synthesis is described by Durand R. Begault in 3-D Sound for Virtual Reality and Multimedia, Academic Press, Cambridge, MA, 1994, which is incorporated herein by reference.

Binaural audio synthesis assigns one or more monaural sound sources to a location in a virtual listening space model and applies HRTFs to generate a binaural audio signal that simulates the auditory experience of the one or more sound sources being located at the location around the listener. Generally, binaural audio synthesis attempts to reproduce the acoustic signals that would occur at the two ears in a normal listening situation. Binaural audio synthesis requires convolving each monaural source signal with a pair of HRTFs that correspond to the direction of the source. The resulting binaural signal is presented to the listener over stereo headphones.

Typically, HRTFs are equalized to compensate for the headphone to ear frequency response as described by F. L. Wightman and D. J. Kistler in Headphone Simulation of Free-Field Listening, J. Acoust. Soc. Am., 85:858-878, 1989, and Henrik Moller, Dorte Hammershoi, Clemen Boje Jensen, and Michael Fris Sorensen in Transfer Characteristics of Headphones Measured on Human Ears, J. Audio Eng. Soc., 43(4):203-217, 1995), both of which are incorporated herein by reference. HRTFs are known in the art will not be described here.

The simplest implementation of a binaural audio synthesis uses the measured HRTFs directly as finite impulse response (FIR) filters. Because the head response persists for several milliseconds, HRTFs can be more than 100 samples long at typical audio sampling rates. The interaural delay may be included in the filter responses directly as leading zero coefficients, or can be factored out in an effort to shorten the filter lengths. It is also possible to use minimum phase filters derived from the HRTFs (see for example, J. M. Jot, Veronique Larcher, and Olivier Warusfel, Digital Signal Processing Issues in the Context of Binaural and Transaural Stereophony, In Proc. Audio Eng. Soc. Conv., 1995, which is incorporated herein by reference), since these will in general be shorter than the original HRTFs.

The use of spatial sound processing technology may be beneficial to participants of group voice communication sessions where multiple participants are involved, such as conference calls and group chats using push-to-talk (PTT) over cellular, particularly where one or more of the participants is using a wireless communication device in conditions where it is difficult to hear all of the participants clearly. Having the voices of participants of a group voice communication session virtually separated in space makes it easier for a listener to keep track of which participant is speaking at any given time.

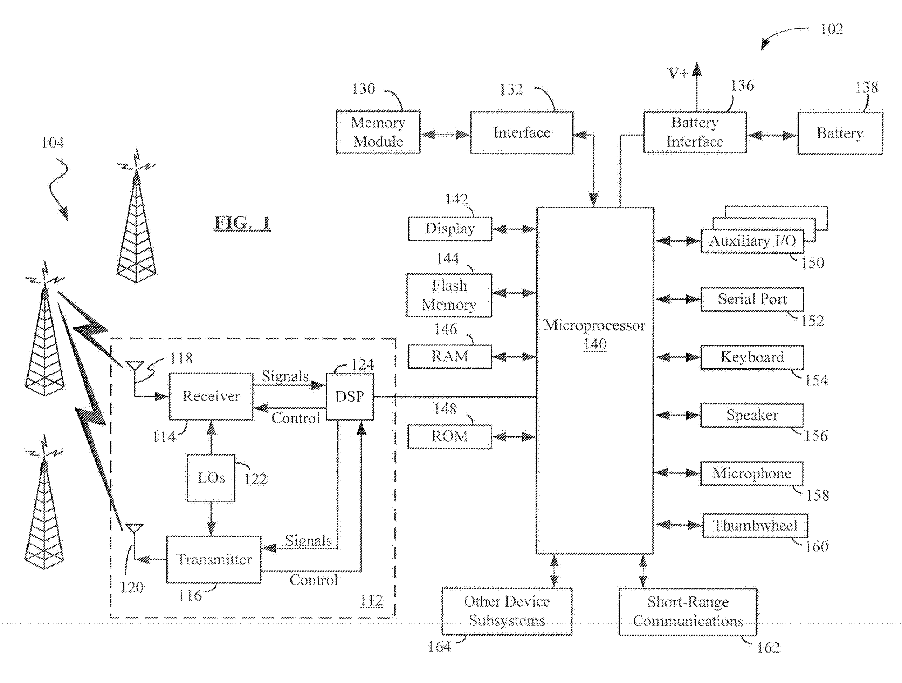

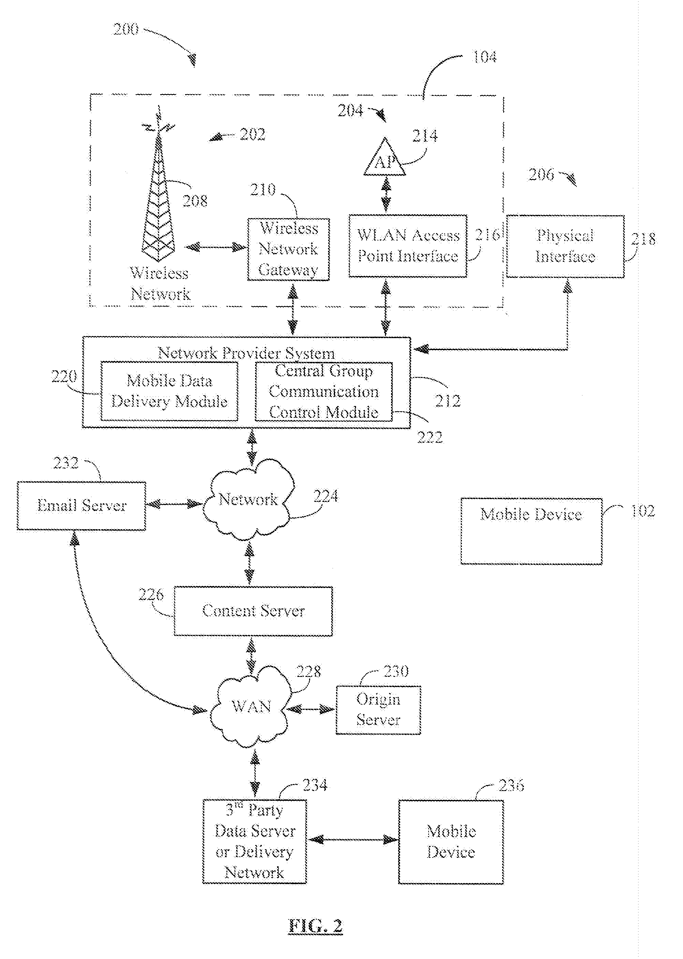

Reference is first made to FIG. 1, which shows a block diagram illustrating a wireless communication device 102 suitable for engaging in a conference call in accordance with one embodiment of the present application. The wireless communication device 102 communicates through a wireless communication network 104. The wireless network 104 includes antenna, base stations, and supporting radio equipment as for supporting wireless communications between the wireless communication device 102 and other devices connected to wireless network 104. The wireless network 104 may be coupled to a wireless network gateway and to a wide area network, shown in FIG. 2.

In one embodiment, the wireless communication device 102 is a two-way communication device having at least voice and data communication capabilities, including the capability to communicate with other computer systems. In one embodiment, the wireless communication device 102 is a handheld device. Depending on the functionality provided by the wireless communication device 102, it may be referred to as a data messaging device, a two-way pager, a cellular telephone with data messaging capabilities, a wireless Internet appliance, or a data communication device (with or without telephony capabilities). The wireless communication device 102 may communicate with any one of a plurality of fixed transceiver stations within its geographic coverage area.

The wireless communication device 102 may incorporate a communication subsystem 112, which includes a receiver 114, a transmitter 116, and associated components, such as one or more antenna elements 118 and 120, local oscillators (LOs) 122, and a processing module such as a digital signal processor (DSP) 124. In one embodiment, the antenna elements 118 and 120 may be embedded or internal to the wireless communication device 102. As will be apparent to those skilled in the field of communications, the particular design of the communication subsystem 112 depends on the wireless network 104 in which wireless communication device 102 is intended to operate.

The wireless communication device 102 may send and receive communication signals over the wireless network 104 after the required network registration or activation procedures have been completed. Signals received by the antenna 118 through the wireless network 104 are input to the receiver 114, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in the DSP 124. In a similar manner, signals to be transmitted are processed, including modulation and encoding, for example, by the DSP 124. These DSP-processed signals are input to the transmitter 116 for digital-to-analog (D/A) conversion, frequency up conversion, filtering, amplification, and transmission to the wireless network 104 via the antenna 120. The DSP 124 not only processes communication signals, but also provides for receiver and transmitter control. For example, the gains applied to communication signals in the receiver 114 and the transmitter 116 may be adaptively controlled through automatic gain control algorithms implemented in the DSP 124.

Network access is associated with a subscriber or user of the wireless communication device 102 via a memory module, such as a memory module 130, which may be a Subscriber Identity Module (SIM) card for use in a GSM network or a USIM card for use in a UMTS. The SIM card is inserted in or connected to an interface 132 of the wireless communication device 102 in order to operate in conjunction with the wireless network 104.

The wireless communication device 102 also includes a battery interface 136 for receiving one or more rechargeable batteries 138. The battery 138 provides electrical power to at least some of the electrical circuitry in the wireless communication device 102, and the battery interface 136 provides a mechanical and electrical connection for the battery 138. The battery interface 136 is coupled to a regulator (not shown) which provides power V+ to the circuitry of the wireless communication device 102.

The wireless communication device 102 includes a microprocessor 140 which controls the overall operation of the wireless communication device 102. Communication functions, including at least data and voice communications, are performed through the communication subsystem 112. The microprocessor 140 also interacts with additional device subsystems such as a display 142, a flash memory 144, a random access memory (RAM) 146, a read-only memory (ROM) 148, auxiliary input/output (I/O) subsystems 150, a data port such as serial port 152, a keyboard or keypad 154, at least one speaker 156 which may be stereo speakers in some embodiments, a microphone 158, a clickable thumbwheel or trackwheel 160, a short-range communications subsystem 162, and any other device subsystems generally designated as 164. Some of the subsystems shown in FIG. 1 perform communication-related functions, whereas other subsystems may provide "resident" or on-device functions. Notably, some subsystems, such as the keypad 154, the display 142, and the clickable thumbwheel 160, for example, may be used for both communication-related functions, such as entering a text message for transmission over the wireless network 104, and executing device-resident functions such as a calculator or task list. Operating system software used by the microprocessor 140 is preferably stored in a persistent store such as the flash memory 144, which may alternatively be the ROM 148 or similar storage element. Those skilled in the art will appreciate that the operating system, specific device applications, or parts thereof, may be temporarily loaded into a volatile store such as the RAM 146.

The microprocessor 140, in addition to its operating system functions, enables execution of software applications on the wireless communication device 102. A predetermined set of applications that control basic device operations, including at least data and voice communication applications, will normally be installed on the wireless communication device 102 during or after manufacture. The wireless communication device 102 may include a personal information manager (PIM) application having the ability to organize and manage data items relating to a user such as, but not limited to, instant messaging, email, calendar events, voice mails, appointments, and task items. Naturally, one or more memory stores are available on the wireless communication device 102 and the memory card 130 to facilitate storage of PIM data items and other information.

The PIM application has the ability to send and receive data items via the wireless network 104. In one embodiment, PIM data items are seamlessly combined, synchronized, and updated via the wireless network 104, with the wireless communication device user's corresponding data items stored and/or associated with a host computer system thereby creating a mirrored host computer on the wireless communication device 102 with respect to such items. This is advantageous where the host computer system is the wireless communication device user's office computer system. Additional applications may also be loaded onto the wireless communication device 102 through the wireless network 104, the auxiliary I/O subsystem 150, the serial port 152, the short-range communications subsystem 162, or any other suitable subsystem 164, and installed by a user in the RAM 146 or a non-volatile store such as the ROM 148 for execution by the microprocessor 140. Such flexibility in application installation increases the functionality of the wireless communication device 102 and may provide enhanced on-device functions, communication-related functions, or both. For example, secure communication applications may enable electronic commerce functions and other such financial transactions to be performed using the wireless communication device 102.

In a data communication mode, a received data signal representing information such as a text message, an email message, or Web page download will be processed by the communication subsystem 112 and input to the microprocessor 140. The microprocessor 140 will further process the signal for output to the display 142 or alternatively to the auxiliary I/O device 150. A user of the wireless communication device 102 may also compose data items, such as email messages, for example, using the keypad 154 and/or the clickable thumbwheel 160 in conjunction with the display 142 and possibly the auxiliary I/O device 150. The keypad 154 maybe either a complete alphanumeric keypad or telephone-type keypad. These composed items may be transmitted through the communication subsystem 112 over the wireless network 104 or via the short range communication subsystem 162.

For voice communications, the overall operation of the wireless communication device 102 is similar, except that the received signals would be output to the speaker 156 and signals for transmission would be generated by a transducer such as the microphone 158. Alternative voice or audio I/O subsystems, such as a voice message recording subsystem, may also be implemented on the wireless communication device 102. Although voice or audio signal output is typically accomplished primarily through the speaker 156 (which may be stereo speakers in some embodiments), the display 142 may also be used to provide an indication of the identity of a calling party, duration of a voice call, or other voice call related information. Stereo headphones may also be used in place of the speaker 156 in which case the wireless communication device 102 includes a output jack or connection port for connecting a headset having one or more speakers and/or a microphone.

The serial port 152 is normally implemented in a personal digital assistant (PDA) type communication device for which synchronization with a user's desktop computer is a desirable, albeit optional component. The serial port 152 enables a user to set preferences through an external device or software application and extends the capabilities of the wireless communication device 102 by providing for information or software downloads to the wireless communication device 102 other than through the wireless network 104. The alternate download path may, for example, be used to load an encryption key onto the wireless communication device 102 through a direct, reliable and trusted connection to thereby provide secure device communication.

The short-range communications subsystem 162 is an additional optional component which provides for communication between the wireless communication device 102 and different systems or devices, which need not necessarily be similar devices. For example, the subsystem 162 may include an infrared device and associated circuits and components, or a wireless bus protocol compliant communication mechanism such as a Bluetooth^{™} communication module to provide for communication with similarly-enabled systems and devices (Bluetooth^{™} is a registered trademark of Bluetooth SIG, Inc.).

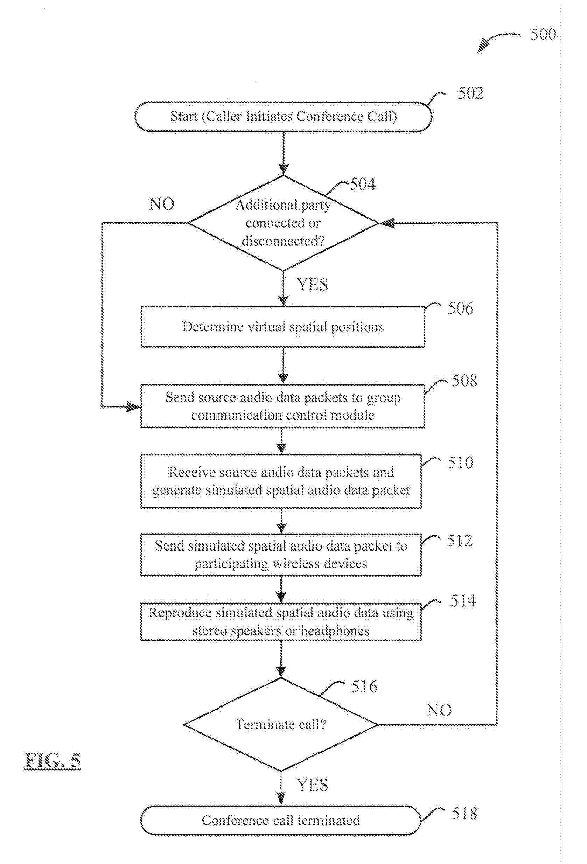

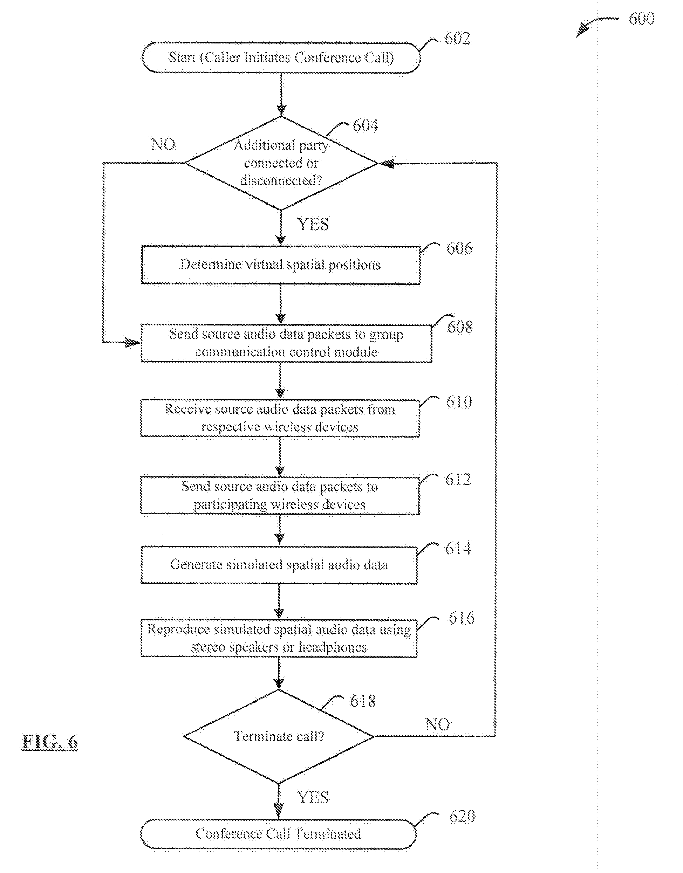

Reference is next made to FIG. 2, which shows a communications system 200 suitable for providing simulated spatial sound in a group voice communication session (e.g., conference call) on a wireless communication device. The system 200 illustrates a general communications system 200 applicable to the system and method to be described in connection with FIGS. 5 and 6. The communication system 200 generally includes one or more mobile electronic devices 102 (only one of which is shown in FIG. 2) and the wireless network 104. The wireless network 104 may include a wireless Wide Area Network (WAN) 202, a Wireless Local Area Network (WLAN) 204, and/or other interfaces 206 (which may not necessarily be wireless).

Referring to FIG. 2, the wireless WAN 202 may be implemented as a packet-based cellular network that includes a number of base stations 208 (one of which is shown in FIG. 2) where each of the base stations 208 provides wireless Radio Frequency (RF) coverage to a corresponding area or cell. The wireless WAN 202 is typically operated by a cellular network service provider that sells subscription packages to users of the mobile electronic devices 102. The wireless WAN 202 comprises a number of different types of networks, for example, Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network) or various other third generation networks such as EDGE (Enhanced Data rates for GSM Evolution) or UMTS (Universal Mobile Telecommunications Systems).

As shown in FIG. 2, the communications system 200 also includes a wireless network gateway 210 and one or more network provider systems 212. The wireless network gateway 210 provides translation and routing services between the network provider system(s) 212 and the WAN 202, which facilitates communication between the mobile electronic devices 102 and other devices (not shown) connected, directly or indirectly, to the network provider system 212.

The WLAN 204 comprises a network which in some examples conforms to IEEE 802.11 standards such as 802.11b and/or 802.11g; however, other communications protocols may also be used for the WLAN 204. The WLAN 204 includes one or more wireless RF Access Points (AP) 214 (one of which is shown in FIG. 2) that collectively provide a WLAN coverage area. For the embodiment depicted in FIG. 2, the WLAN 204 is operated by an enterprise (for example, a business or university) and the access points 214 are connected to an access point (AP) interface 216. The AP interface 216 provides translation and routing services between the access points 214 and the network provider system 212 to facilitate communication between two or more of the mobile electronic devices 102 and other devices connected, directly or indirectly, to the network provider system 212. The AP interface 216 is implemented using a computer, for example, a server running a suitable computer program or software.

According to one embodiment, the other interfaces 206 may be implemented using a physical interface indicated by reference 218. The physical interface 218 includes an Ethernet, Universal Serial Bus (USB), Firewire, or infrared (IR) connection implemented to exchange information between the network provider system 212 and the mobile electronic device 102.

The network provider system 212 comprises a server or server modules or a number of servers or server modules which are typically located behind a firewall (not shown). In one embodiment, the network provider system 212 includes a number of functional program modules in the form of computer software including a mobile data delivery module 220 and a central group communication control module 222.

In one embodiment, the various modules may be implemented as a number of services run on a single server or as a number of interconnected servers each running a software program to implement the functionality of the respective module. The network provider system 212 provides access for the mobile electronic devices 102, through either the wireless WAN 202, the WLAN 204, or the other connection 206 to the devices connected, for example, through an enterprise network 224 (e.g., an intranet), to the network provider system 212. In one embodiment, the data delivery module 220 and the central group communication control module 222 are implemented on a computer, such as the network provider system 212. In one embodiment, the central group communication control module 222 is responsible for coordinating and/or facilitating conference voice sessions involving two or more of the wireless communication devices 102 communicating with each other via the WAN 202, the wireless network gateway 210 and the network provider system 212. The function of the central group communication control module 222 will be described below in greater detail in connection with FIGS. 5 and 6.

The enterprise network 224 comprises a local area network, an intranet, the Internet, a direct connection, or combinations thereof. According to one embodiment, the enterprise network 224 comprises an intranet for a corporation or other type of organization. In at least some embodiments, the network provider system 212 is part of the enterprise network 224, and is located behind a corporate firewall and connected to the wireless network gateway 210 through the Internet. As shown in FIG. 2, an application/content server 226 may be connected to the enterprise network 224 and also to another network, for example a Wide Area Network (WAN), indicated by reference 228. In some embodiments, an email server 232 and/or the content server 226 form part of the enterprise network 224. The WAN 228 may further connect to other networks. In one embodiment, the WAN 228 comprises or is configured with the Internet, a direct connection, a LAN, a wireless communication link, or any combination thereof. Content providers, such as Web servers, may be connected to the WAN 228, an example of which is shown in FIG. 2 as an origin server, indicated by reference 230. Other devices or external networks may be connected to WAN 228 such as a third party data server or delivery network 234. The third party data server/delivery network 234 may be responsible for delivering content to/from specific mobile devices such as a mobile device 236. In one embodiment, the third party data server 234 may be another cellular phone provider network separate from the WAN 202 and the mobile device 236 may be a cellular phone or another voice enabled mobile device. The WAN 228 may be connected to any number of third party servers having associated electronic devices. In one example configuration, the email server 232 is connected to the enterprise network 224 and the email server 232 is configured to direct or redirect email messages received over the WAN 228 and internally within the enterprise network 224 to be addressed to the mobile electronic device(s) 102. While the central group communication control module 222 is shown implemented in the network provider system 212, the central group communication control module 222 may act in part as a service mediator and may be implemented on any server or computer system within the system 200.

According to one embodiment of the present application, the mobile data delivery module 220 provides connectivity between the wireless WAN 202 and the WLAN 204 and the other connection 206 and devices and/or networks connected directly or indirectly to the network provider system 212. In one embodiment, the connectivity provided may be HTTP based connectivity providing an Internet based service connection to devices connected to the wireless WAN 202, the WLAN 204, or the other connection 206 and devices and/or networks connected directly or indirectly to the network provider system 212. The network 224, the application/content server 226, the WAN 228, and the origin server 230, are individually and/or collectively in various combinations a content source for the network provider system 212. It will be appreciated that the system shown in FIG. 2 comprises but one possible communication network or configuration of a multitude of possible configurations for use with the mobile electronic devices 102.

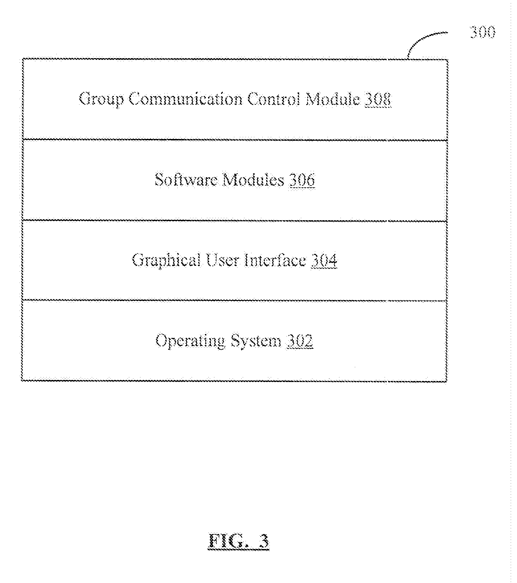

Reference is next made to FIG. 3, which shows a block diagram illustrating a memory 300 of the wireless communication device 102. The memory 300 has various software components for controlling the wireless communication device 102 and may include, for example, the flash memory 144, the RAM 146 and/or the ROM 148. In accordance with one embodiment of the present application, the wireless communication device 102 is intended to be a multi-tasking wireless communication device configured for sending and receiving data items and for making and receiving voice calls. To provide a user-friendly environment to control the operation of the wireless communication device 102, an operating system (OS) 302 resident on the wireless communication device 102 provides a basic set of operations for supporting various applications typically operable through a graphical user interface (GUI) 304. For example, the operating system 302 provides basic input/output system features to obtain input from the auxiliary I/O 150, the keypad 154, the clickable thumbwheel 160, and other input devices, and to facilitate output to the user via the display 142. The GUI 304 is typically a component of the operating system 302. One or more software modules 306 for managing communications or providing a personal digital assistant (PDA) or other functions may also be included. The memory 300 also includes an email and calendar client, which may be combined in, for example, a PIM application having email-based calendaring and scheduling functions. Typically, the PIM is installed as one of the software modules 306. The programmed instructions further comprise a group communication control module 308, which is responsible for managing and/or facilitating a conference call feature on the wireless communication device 102, which will be described in more detail below in connection with FIGS. 5 and 6.

Thus, the wireless communication device 102 includes computer executable programmed instructions for directing the wireless communication device 102 to implement various applications. The programmed instructions may be embodied in the one or more software modules 306 resident in the memory 300 of the wireless communication device 102. Alternatively, the programmed instructions may be tangibly embodied on a computer readable medium (such as a DVD, CD, floppy disk or other storage media) which may be used for transporting the programmed instructions to the memory 300 of the wireless communication device 102. Alternatively, the programmed instructions may be embedded in a computer-readable, signal-bearing medium that is uploaded to the wireless network 104 by a vendor or supplier of the programmed instructions, and this signal-bearing medium may be downloaded through one or more of the interfaces 112, 150, 152, 162 to the wireless communication device 102 from, for example, the wireless network 104 by end users.

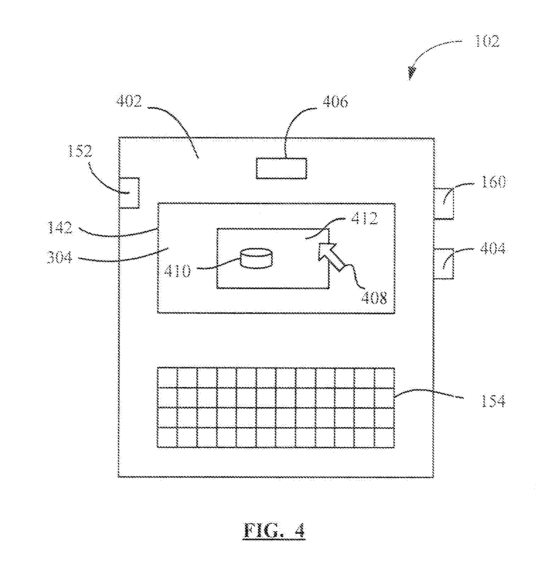

Reference is next made to FIG. 4, which shows a front view of the wireless communication device 102. As mentioned above, the wireless communication device 102 may be a data and voice-enabled handheld device. The wireless communication device 102 includes a casing 402, the data or serial port 152, the display screen 142, the graphical user interface (GUI) 304, the keypad 154, the clickable thumbwheel 160, one or more input buttons 404 (e.g., select, cancel, talk buttons), and signal inputs/outputs 406 (e.g., power connector input, microphone, speaker, data interface input, etc.). Internally, the wireless communication device 102 includes one or more circuit boards (not shown), the microprocessor 140 (FIG. 1), the memory 300 (FIG. 3), the battery 138 (FIG. 1), the antennae 118, 120 (FIG. 1), etc., which may all be coupled to the signal inputs/outputs 406, the keypad 154, the display screen 142, the clickable thumbwheel 160, etc.

The microprocessor 140 is typically coupled to one or more input devices (e.g., the buttons 404, the keypad 154, and the clickable thumbwheel 160) for receiving user commands or queries and the display 142 for displaying the results of these commands or queries. For example, user queries may be transformed into a combination of commands for producing one or more tables of output data which may be incorporated in one or more display pages for presentation to the user. The microprocessor 140 is also coupled to the memory 300.

A user may interact with the wireless communication device 102 and its software modules 306 and the group communication control module 308 using the GUI 304. The GUI 304 is controlled by the operating system 302 (FIG. 3) and provides a display format enabling the user to choose commands, execute application programs, manage computer files, and perform other functions by selecting pictorial representations (i.e., icons), or selecting items from a menu through the use of an input or pointing device such as the clickable thumbwheel 160 and/or the keypad 154. Generally, the GUI 304 is used to convey information and receive commands from users and generally includes a variety of GUI objects or controls including icons, toolbars, drop-down menus, pop-up menus, text, dialog boxes, buttons, etc. A user typically interacts with the GUI 304 presented on the display 142 by using an input or pointing device to position a pointer or cursor 408 over an object 410 (i.e., "pointing" at the object) and by "clicking" on the object 410 (e.g., by depressing the thumbwheel 160 or a button on the keyboard 154, etc.). This is often referred to as a point-and-click or selection operation. Typically, the object 410 may be highlighted (e.g., shaded) when it is selected or pointed at by the pointer or cursor 408 to indicate that the object 410 is selectable.

Typically, a GUI-based system presents application, status, and other information to the user in windows appearing on the display 142. A window 412 is a display area shown within the display 142, typically rectangular, in which a user may view an application or document. The window 412 may be open, closed, displayed full screen, reduced to an icon, increased or reduced in size, or moved to different areas of the display 142. Multiple windows 412 may be displayed simultaneously. For example, the windows 412 may be displayed within other windows, overlapped with other windows, or tiled within the display area.

Reference is next made to FIG. 5, which shows a flow chart illustrating a method 500 for providing simulated spatial sound in group voice communication sessions on a wireless communication device in accordance with one embodiment of the present application. The method 500 illustrates a first centralized approach to processing a conference call in which the spatial sound simulation is done by the central group communication control module 222 of the system 200 shown in FIG. 2. It will be understood by persons skilled in the art that the method 500 includes an iterative process which is continually repeated many times per second as part of a packet-based audio processing block until the conference call is terminated (e.g., every 20ms or 50 times per second). The first step 502 is not repeated on subsequent passes or loops of the method 500. In the first step 502, a caller initiates a conference call with at least one other participant. For example, this may involve pressing a call button on the wireless communication device 102 such as the button 404 (FIG. 4), which may initiate a push-to-talk call with one or more other participants who are using devices such as the wireless communication device 102. In another example, the call initiated may involve dialling a number using the wireless communication device 102 while selecting a conference call feature, such as by using the keyboard 154 and/or thumbwheel 160 (FIG. 1) to initiate the call using one of the software modules 306 and/or the group communication control module 308 (FIG. 3) installed on the wireless communication device 102. The communications system 200 manages and facilitates the connections between the participants of the conference call using, for example, the central group communication control module 222 as a control module to conduct and/or direct the method 500.

In the next step 504, after the callers have been connected in a conference call, the number of parties which are a part of the conference call is determined. On subsequent passes or loops of the method 500, the step 504 serves to detect whether any additional callers have joined the conference call or whether one or more callers have left the conference call in progress.

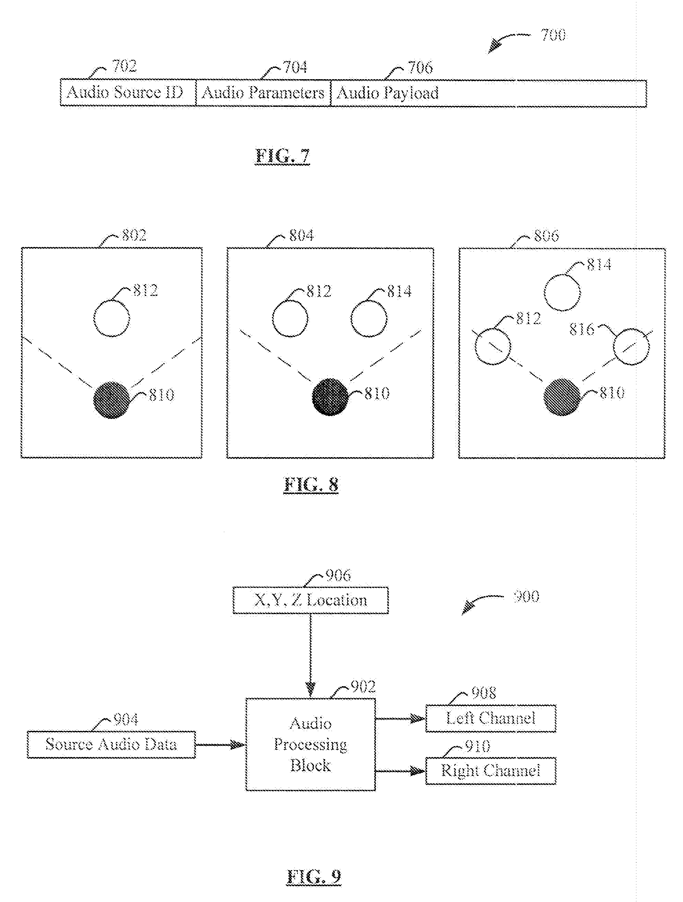

In the next step 506, for each participant in the conference call virtual spatial positions of the other participants are determined based on the number of participants and any preferences which have been set. This step is performed by the central group communication control module 222 of the communications system 200. The configuration and/or relative positions of callers may be predetermined or preset for a given number of parties. For example, the person initiating (i.e., the initiator) the conference call may have specified prior to the initiation or during a conference call in progress that other participants are to be equally spaced around the initiator such that the entire 360 degrees of space around the initiator is filled with participants with each participant being equally spaced about them (e.g., 3 participants in addition to the initiator separated by 120 degrees about a horizontal plane). Sound positioning is described in more detail below in connection with FIG. 8.

The step 506 is optional on subsequent passes of the method 500 as the positions of participants may already have been determined in the first pass of the method 500. If the number of participants has changed on subsequent passes (as determined in step 504), the virtual sound positioning may be adjusted to accommodate the new number of participants (typically only if parties are added to accommodate the new participants), depending on the number of participants, preferences of the conference call initiator and other participants and/or the loading on the network provider system 212. For example, if the preferences are such that other participants are to be equally spaced about the participant and a new participant joins the conference call, then the positioning of the participants should be adjusted to accommodate the new participant.

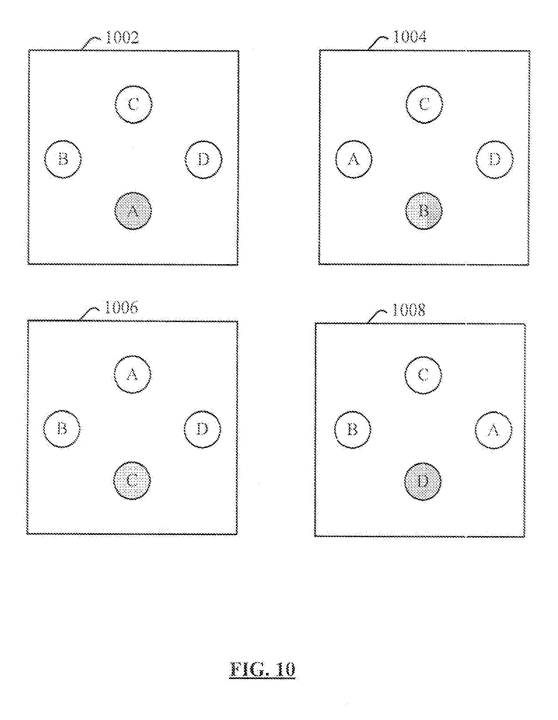

It will be appreciated that a participant's own voice is typically not reproduced during the group voice communication session, and the virtual spatial positions of the other participants in the conference call are unique for each participant. In some embodiments, participants may have control over the configuration of the sound positioning of the other participant's voices. To reduce the processing required, user control over the configuration of the sound positioning, and in some cases the position may be determined based on spatial positions previously determined for other participants such that the degree of variation in spatial positioning is kept to a minimum between participants. In this way, reuse of spatial audio data may be reduced as much as possible, as described more fully below in connection with FIG. 10.

Next, in step 508 the wireless communication devices 102 of the participants involved in the conference call receive audio signals from the microphone 158 (such as the voice of the participant), digitize the audio signals, package the resulting audio data into a source audio data packet 700 (FIG. 7), and send the source audio data packet 700 (FIG. 7) to the central group communication control module 222 using any of the suitable communications mechanisms provided by the communication system 200 (e.g., using the network 104 and the communication subsystem 112). As will be described in more detail below with reference to FIG. 7, each audio data packet 700 may include an audio source ID 702 tag, audio parameters 704, and an audio payload 706. In some embodiments, audio parameters 704 may not be included.

Next, in step 510 the central group communication control module 222 receives the source audio data packets 700 from each of the participants. For each of the participants, a spatial sound simulating algorithm is applied to the audio payloads 706 of other participants and the determined virtual spatial positions to generate a simulated spatial audio data packet. The simulated spatial audio data packet for each participant will be unique in that the audio payloads 706 of the other participants will be adjusted for the particular configuration of spatial positions determined for that particular participant. The spatial sound simulating algorithm uses binaural audio synthesis techniques comprising applying a pair of suitable Head-Related Transform Functions (HRTFs) to the respective audio payloads using the respective spatial positions determined for each of the other participants to generate the spatial audio data packet. Suitable HRTFs would be understood to a person of skill in the art and need not be described here in order to avoid obscuring the methods and systems which are the subject of the present application. It will be appreciated that during spatial sound simulation, the audio payloads 706 of individual participants are identified via the audio source ID tag 702, whereby each respective source audio data packet 700 is associated with a determined virtual spatial position.

The spatial audio data packet comprises an identifier (ID) tag associated with the participant the packet is intended for (typically, the ID tag is the same as the audio source ID tag 702 for convenience) and a spatial audio data payload. Typically, the spatial audio data is binaural audio data and the spatial audio data payload is a binaural audio data payload. The binaural audio which results from the spatial sound simulating process is a binaurally modified version of the source audio payload 706. In some embodiments, additional audio processing may also be performed to improve the audio quality and/or to produce a transaural version comprising transaural audio data which is preferred for reproduction using stereo speakers. In such cases, the spatial audio data is transaural audio data.

It will be appreciated that during a conference call, for a given participant the spatial audio data generated for all of the other participants is combined within the spatial audio data packet. In contrast, during a PTT group chat only one participant may speak at a time so the spatial audio data payload contains data from only one of the other participants. The result of the spatial sound simulation is that from a participant's perspective, each of the other participants' voices appear to originate from a different point in space around them.

Participant preferences may be stored by the central group communication control module 222 or specified within the audio parameters 704 of the source audio data packets 700. Typically, the central group communication control module 222 applies the spatial sound simulating algorithm once for each of the participants in the conference call such that each participant receives a different audio data packet which excludes his or her own voice and simulates the voices of the other participants being spaced around them in space. The central group communication control module 222 may impose restrictions on the positioning so as to make some processing redundant and thereby reduce the computational load of the module 222, as is described in more detail in connection with FIG. 10 below.

Next, in step 512 the spatial audio data packets are sent to the respective wireless communication devices 102 of the respective participants via the ID tag of spatial audio data packets. Next, in step 514 the spatial audio data packets are reproduced by the wireless communication devices 102 using stereo speakers of the wireless communication device 102 or using a pair of stereo headphones attached to the wireless communication device 102. The headphones may be either a digital pair of head phones connected to, for example, the serial port 152, or a conventional analog pair of headphones connected to an analog output of the wireless communication device 102. When the spatial data packets are reproduced on the wireless communication devices 102, each participant perceives the voices of the other participants to be located about them at a virtual spatial position. It will be appreciated that the spatial audio data received by the wireless communication device may be processed via a digital-to-analog converter (DAC) of the wireless communication device to produce a simulated spatial audio data signal on the wireless communication device via analog stereo headphones or speakers. It will also be appreciated that the spatial audio data may be encoded using known audio encoding techniques (e.g., AMR, G711, stereo, etc.).

Next, in step 516 before repeating steps 504-514, a check is performed to determine whether any action to terminate the conference call has occurred (such as, for example, explicit call termination by the initiating member by requesting termination using the conference call module 308 or the disconnection of participants). If the call has been terminated, operations 500 proceed to step 518 where the conference call ends. While some examples are provided for what may constitute the termination of a conference call, any conditions may be set using the group communication control module 308 and/or the central group communication control module 222 to define what constitutes the end of a conference call. If the call has not been terminated, the method 500 repeats beginning with the step 504.

It will be appreciated that in the central processing model illustrated in FIG. 5, it is more efficient for the central group communication control module 222 to mix all the processed audio data into two channels and send only one spatial audio data packet to each wireless device for each pass of the process 500, rather than sending two channels of audio data for every caller to every other caller. For example, if there are N callers on a conference call, if the central group communication control module 222 mixes everything for each caller but does not mix all the processed audio data into two channels for each caller, 2*(N) audio streams must be sent to each participant (i.e., 2x to account for each of the stereo channels, which is duplicated N times for each participant). Additionally, if the mixing occurs on the wireless communications device 102 (as will be described in connection with FIG. 6, below), the audio data is sent to every caller for every other caller, which results in 2*(N)*(N-1) audio streams (i.e., 2x to account for each stereo channel, times N (once for every caller), times (N-1) as each other caller's data stream is sent to each caller). Therefore, while the method described below in connection with FIG. 6 has advantages, such as a decreased processing load on the central group communication control module 222, the method 500 is typically preferred.

Although for purposes of illustration individual audio data packets and spatial audio data packets are described, it will be appreciated that a stream of audio data packets and spatial audio data packets are generated and received by the communications network 200 during the implementation of the method 500.

Reference is next made to FIG. 6 which shows a flow chart illustrating a method 600 for providing simulated spatial sound in group voice communication sessions on a wireless communication device in accordance with another embodiment of the present application. The method 600 illustrates a decentralized approach to processing a conference call in which spatial sound simulation is performed by each of the wireless communications devices 102 involved in the conference call by the group communication control module 308 (FIG. 3) of the respective wireless communication devices 102. It will be understood by those skilled in the art that the method 600 includes an iterative process which is continually repeated many times per second until the conference call is terminated. The first step 602 is not repeated on subsequent passes or loops of the method 600. In the first step 602, a caller initiates a conference call with at least one other participant. For example, this may involve pressing a call button on the wireless communication device 102 such as the button 404 (FIG. 4), which may initiate a push-to-talk call with one or more other callers who are using devices such as the wireless communication device 102. In another example, the call initiation may involve dialling one or more numbers using the wireless communication device 102 while selecting a conference call feature, such as by using the keyboard 154 and/or thumbwheel 160 (FIG. 1) to initiate the call using one of the software modules 306 and/or the group communication control module 308 (FIG. 3) installed on the wireless communication device 102. The communications system 200 facilitates the initiation of the conference call and manages the connections of the participants of the conference call using, for example, the central group communication control module 222. It will be understood by those skilled in the art that, while the system 200 is used as an exemplary facilitator for the method 600, the method 600 may also be employed using alternative broadcast systems such as point-to-multipoint based systems, which may eliminate use of the system 200 with the method 600.

In the next step 604, after the callers have been connected in a conference call, the number of parties which are a part of the conference call is determined. On subsequent passes or loops of the method 600, the step 604 serves to detect whether any additional callers have joined the conference call or whether one or more callers have left the conference call in progress.

In the next step 606, for each participant in the conference call virtual spatial positions of the other participants are determined based on the number of participants and any preferences which have been set. This step may be performed by the group communication control module 308 of the communications system 200 or by a protocol operating on the wireless communication devices 102, in the absence of the system 200. The configuration and/or relative positions of callers may be predetermined or preset for a given number of parties. For example, the person initiating (i.e., the initiator) the conference call may have specified prior to the initiation or during a conference call in progress that other participants are to be equally spaced around the initiator such that the entire 360 degrees of space around the initiator is filled with participants with each participant being equally spaced about them (e.g., 3 participants in addition to the initiator separated by 120 degrees about a horizontal plane). Sound positioning is described in more detail below in connection with FIG. 8.

The step 606 is optional on subsequent passes of the method 600 as the positions of participants may already have been determined in the first pass of the method 600. If the number of participants has changed on subsequent passes (as determined in step 604), the virtual sound positioning may be adjusted to accommodate the new number of participants (typically only if parties are added to accommodate the new participants), depending on the number of participants, preferences of the conference call initiator and other participants and/or the loading on the network provider system 212. For example, if the preferences are such that other participants are to be equally spaced about the participant and a new participant joins the conference call, then the positioning of the participants should be adjusted to accommodate the new participant.

It will be appreciated that a participant's own voice is typically not reproduced during the group voice communication session, and the virtual spatial positions of the other participants in the conference call are unique for each participant. In some embodiments, participants may have control over the configuration of the sound positioning of the other participant's voices. To reduce the processing required, user control over the configuration of the sound positioning, and in some cases the position may be determined based on spatial positions previously determined for other participants such that the degree of variation in spatial positioning is kept to a minimum between participants. In this way, reuse of spatial audio data may be reduced as much as possible, as described more fully below in connection with FIG. 10.

The method 600 makes it easier for users of the wireless communication devices 102 to customize the spatial sound positioning configuration since the sound processing is done locally on the wireless communication device 102 reducing the amount of instruction data that must be sent to the central group communication control module 308 and eliminating any associated lag time between adjusting the configuration on the wireless communication device 102 and hearing the resulting change in sound. Sound positioning is described in more detail below in connection with FIG. 8.

Next, in step 608 the wireless communication devices 102 of the participants involved in the conference call receive source audio signals from the microphone 168 (such as the voice of the participant), digitizes the source audio signals, packages the resulting source audio data into an audio data packet 700 (FIG. 7), and sends the audio data packet 700 (FIG. 7) to the central group communication control module 222 using any of the suitable communications mechanisms provided by the communication system 200 (e.g., using the network 104 and the communication subsystem 112).

Next, in step 610 the central group communication control module 222 receives the source audio data packets 700 from each of the participants. For each participant, the source audio packets 700 corresponding to the other participants in conference call are determined. The determined audio data packets for each participant are optionally combined within a combined audio data packet or data stream (i.e., two or more data packets sent sequentially).

Next, in step 612 the source audio data packets 700 for each participant are sent to the respective wireless communication devices 102. Only the audio data packets of the other participants are transmitted to a given participant in the conference call.

Next, in step 614 each participant receives the audio data packet(s) of the other participants on their respective wireless communication device 102 via the group communication control module 308. If the received audio data packets were received via a combined audio data packet, then individual audio data packets 700 of the other wireless communication devices in the group voice communication session are first be extracted from the combined audio data packet. For each of the audio data packets 700, a spatial sound simulating algorithm is applied to the audio payloads 706 of other participants and the determined virtual spatial positions to generate simulated spatial audio data (which may or may not be formed as a packet), as described above. Also as described above, the spatial sound simulating algorithm uses binaural audio synthesis techniques comprising applying a pair of suitable Head-Related Transform Functions (HRTFs) to the respective audio payloads using the respective spatial positions determined for each of the other participants to generate the spatial audio data.

Also as described above, typically the spatial audio data is binaural audio data and the spatial audio data payload is a binaural audio data payload. The binaural audio which results from the spatial sound simulating process is a binaurally modified version of the source audio payload 706. In some embodiments, additional audio processing may also be performed to improve the audio quality and/or to produce a transaural version comprising transaural audio data which is preferred for reproduction using stereo speakers. In such cases, the spatial audio data is transaural audio data.

It will be appreciated that during a conference call, for a given participant the spatial audio data generated for all of the other participants is combined. In contrast, during a PTT group chat the spatial audio data is generated for only one of the other participants since only one participant may speak at a given time.

Next, in step 616 the spatial audio data is reproduced using stereo speakers of the wireless communication device 102 or using a pair of stereo headphones attached to the wireless communication device 102. When the spatial audio data is reproduced on the wireless communication devices 102, each participant perceives the voices of the other participants to be located about them. The headphones may be either a digital pair of head phones connected to, for example, the serial port 152, or a conventional analog pair of headphones connected to an analog output of the wireless communication device 102.

Next, in step 618 before repeating steps 604-616 a check is performed to determine whether any action to terminate the conference call has occurred (such as, for example, explicit call termination by the initiating member by requesting termination using the conference call module 308 or the disconnection of participants). If the call has been terminated, operations 600 proceed to step 620 where the conference call ends. While some examples are provided for what may constitute the termination of a conference call, any conditions may be set using the group communication control module 308 and/or the central group communication control module 222 to define what constitutes the end of a conference call. If the call has not been terminated, the method 600 repeats beginning with the step 604.

Since the method 600 depends on the microprocessor 140 of the wireless communication devices 102 to apply the spatial sound simulating algorithm to the source audio data packets, less of a processing burden is placed on the network provider system 212. However, in order for the method 600 to operate, the audio data packets 700 from the other participants involved in the conference call are distributed to the wireless communication devices 102 resulting in potentially higher bandwidth requirements of the system 200 compared with the method 500 describe above. In one embodiment, the system 200 may simply distribute the source audio data to each of the wireless communication devices 102 in a point-to-multipoint fashion, or the system 200 may not be needed for point-to-multipoint operation.

The method 600 gives the users of the wireless communication devices 102 greater control over the configuration of the spatial sound simulation since the user may set preferences locally using the wireless communication device 102. This provides for greater ease of use as users may dynamically adjust the configuration of a group voice communication session (e.g., conference call) in progress depending on the circumstances. While the term data packet and data packet stream or data stream are used interchangeably in the detailed description, it will be understood by those skilled in the art that the iterative nature of the methods 500 and 600 produces more than one data packet, which results in a data stream sent over time.

Although for purposes of illustration individual audio data packets and spatial audio data packets are described, it will be appreciated that a stream of audio data packets and spatial audio data packets are generated and received by the communications network during the implementation of the method 600.

Reference is next made to FIG. 7 which shows a block diagram illustrating an source audio data packet 700 in accordance with one embodiment of the present application. The audio data packet 700 may be particularly useful in combination with the methods 500 and/or 600 where audio data from each user needs to be identified such that the processor applying the spatial sound simulating algorithm (e.g., either the microprocessor 140 running the group communication control module 308 or the network provider system 212 running the central group communication control module 222) can identify from which participant (i.e., source) the audio data originated.

The audio data packet 700 comprises an audio source identification (ID) 702 tag, audio parameters 704, and an audio payload 706. The audio source ID 702 is used to differentiate between the multiple potential sources (i.e., participants) involved in a conference call. The audio device ID 702 may use any scheme to identify the source of a particular audio data packet such as the originating party's telephone number, a PIN number associated with the originating wireless communication device 102, the originating party's name and/or alias, the originating party's email address, or group identifier where users are lumped into particular groups. For efficiency reasons, whichever type of ID is chosen for the audio device ID 702, it is preferably encoded in a small and efficient tag (e.g., using a number designation) to decrease the size of the audio device ID 702. In one embodiment, the central group communication control module 222 may be responsible for assigning efficient audio device ID 702 tags based on other identity schemes and keeping a record of which audio device ID 702 tag is associated with which ID. The audio parameters 704 may include any parameters specified or requested by the particular participant, such as a preferred placement in 3D space, etc. Finally, the audio payload 706 represents the digitized audio data (e.g., audio data) from the of the source audio (i.e., voice of the conference call participant).

If the wireless communications device 102 does all of the audio processing (i.e., the decentralized approach as described in the method 600) the only parameter of the audio data packet 700 that is needed is an identifier for every audio packet that the wireless communications device 102 receives, such as the audio source ID 702. In one example, the audio source ID 702 could be the originating phone number, but it may be more efficient when the conference call is established that the originating phone numbers be mapped to an enumeration list (i.e., CALL_ID_1, CALL_ID_2, etc.). This approach saves storage space and bandwidth.

Reference is next made to FIG. 8 illustrating exemplary positioning configurations of participants of a group voice communication session from the perspective of a participant 810. The wireless communication devices 102 allow users to configure the position of the other participants in space when the user participates in the group communication session. The user may configure: (a) the central group communication control module 222 of the communication system 200 via the group communication control module 308 (FIG. 3) which relays the desired configuration settings from the wireless communication devices 102 to the central group communication control module 222 when using the communication system 200 to employ the method 500; or (b) the group communication control module 308 directly, when using the communication system 200 to employ the method 600. When the method 500 is used, the central group communication control module 222 of the communication system 200 applies the spatial sound simulating algorithm to the source audio data packets to obtain the desired spatial audio data packets. When the method 600 is used, the group communication control module 308 of the wireless communication device 102 applies the spatial sound simulating algorithm to the source audio data packets to obtain the desired spatial audio data.

In the examples of FIG. 8, the participant 810 (shown in black) requests that the other participants (shown in white) in the group communication session be equally spatially distributed about an angle of 120 degrees in front of them with the participant 810 being located at the vertex of the angle. FIG. 8 illustrates three examples: a first configuration 802 having one other participant 812, a second configuration 804 having two other participants 812 and 814, and a third configuration 806 having three other participants 812, 814 and 816. In the first configuration 802, based on the desired 120 degree configuration the group communication control modules 308 and/or 222 position the other participant 812 directly in front of the participant 810 as shown.

In the second configuration 804, the group communication control modules 308 and/or 222 position the other participants 812 and 814 spaced apart directly in front of the participant 810 as shown. In the third configuration 806, the group communication control modules 308 and/or 222 position the other participants 812, 814, and 816 equally spaced in front of the participant 810 as shown.

Alternatively, instead of positioning within two-dimensional space (i.e., the virtual spatial positions being limited to a horizontal plane and there having no vertical component) as in the examples of FIG. 8, positioning may be three-dimensional within a conventional X, Y, Z grid system, for example, with the participant placed at the vertex (0, 0, 0) and other participants placed in 3D space around the participant. Participants may be placed anywhere in 3D space, including above and/or below the participant. The participant may set restrictions about which quadrants or planes other participants are permitted to occupy in 3D space. The participant may also individually choose locations for other participants in a cube which may be displayed on the display 142 of the wireless communication device 102 for ease of configuration. Numerous positioning schemes and arrangements within the X, Y, Z grid would be understood by a person skilled in the art. While some examples of spatial sound positioning have been provided for purpose of illustration, other methods to determine suitable sound positioning in 2D or 3D space would be understood by persons skilled in the art.

Reference is next made to FIG. 9 which shows a block diagram illustrating an audio processing circuit 900 for use by the group communication control modules 308 and/or 222 in accordance with one embodiment of the present application. The audio processing circuit 900 includes an audio processing block 902 that receives a number of inputs including source audio data 904 and positional data 906. The source audio data 904 includes a number of source audio data packets 700 and the positional data 906 includes a spatial position (e.g., a 2D or 3D positional coordinate with respect to a 2D or 3D coordinate system) associated with the source of each respective audio data packet 700, for example via the respective audio source ID tag 702. The spatial position may be a relative position to the user for which the processing is being done (i.e., the user of the particular wireless communication device 102 for which the processed spatial sound is destined). In one embodiment, a source audio data packet 700 is received by the audio processing block 902 through the input 904 and an associated position (e.g., 0, 1, 0) is received through the input 906 by the user of the wireless communication device 102. The spatial position may indicate, for example, that voice of the participant associated with the data packet 700 is to spatially simulated to be placed one meter in front of the user of the wireless communication device 102.

The audio processing block 902 applies the spatial sound simulating algorithm (i.e., the application of the HRTFs) to respective audio data packets 700 and positional data 906 pairings and outputs a single spatial sound signal using a left channel output 908 and a right channel output 910. It will be appreciated that during a conference call, for a given participant the spatial audio data generated for all of the other participants is processed via the audio processing block 902 which then combines the spatial audio data generated for each participant before outputting the result. In contrast, during a PTT group chat the spatial audio data is generated for only one of the participants since only one of the other participants may speak at a given time. The sound output from the outputs 908 and/or 910 may be either analog or digital and is ultimately delivered to stereo speakers or a stereo headset worn by the user of the wireless communication device 102.

In the centralized approach of the method 500, the intermediate result of the audio processing block 902 during a conference call, i.e., individual spatial sound components (the spatial audio date) for each participant, may be temporality stored by the central group communication control module 222 for reuse when producing the spatial audio data packet for the next participant as will be better understood with reference to FIG. 10.

It will be appreciated that the audio processing circuit 900 may be implemented using any known technique, including digital signal processors, application specific integrated circuits, general purpose microprocessors combined with appropriate software coding instructions, or any other method known to those skilled in the art. In a centralized embodiment, the audio processing circuit 900 may be implemented using either a microprocessor in combination with the central group communication control module 222. In a decentralized embodiment, the audio processing circuit 900 may be implemented using either the microprocessor 140 in combination with the group communication control module 308 and/or the network provider system 212 in combination with the central group communication control module 222.

Reference is next made to FIG. 10 which shows a series of diagrams illustrating a sound positioning method in accordance with one embodiment of the present application for reducing processing requirements. One of the challenges associated with implementing the method 500 in which the central group communication control module 222 (FIG. 2) is responsible for generating the spatial audio data packets is that the processing burden increases with each participant. This processing burden can be reduced somewhat by restricting the variations in positioning configurations by, for example, disabling the ability of participants to configure spatial sound positioning (by a system administrator or the like) when the communications system 200 is implementing the method 500.

FIG. 10 shows an example of how the processing burden of the network provider system 212 may be reduced when implementing the method 500. The shown example has 4 participants denoted by the letters A, B, C and D. Box 1002 illustrates a sound positioning of participants A, B, C, and D from the perspective of participant A. The central group communication control module 222 in this case processes three audio data packet streams originating from participants B, C, and D to generate a spatial audio data packet stream to be sent to participant A.

Box 1004 illustrates a sound positioning of participants A, B, C, and D from the perspective of participant B. Since only participants A and B have switched position from Box 1002 to Box 1004, the spatial audio data previously generated for participants C and D may be reused in the construction of the spatial audio data packet stream to be sent to participant B since participants C and D occupy the same positions from the perspective of participants A and B. Only the spatial audio data for participant A needs to be generated and the combined with the previously generated data for C and D.

Box 1006 illustrates a sound positioning of the participants from the perspective of participant C. Participant B has the same position as in Box 1002, and participant D has the same position as in Box 1002 and 1004. Thus, the spatial audio data previously generated for participants B and D may be reused in the construction of the spatial audio data packet stream to be sent to participant C. Only the spatial audio data for participant A needs to be generated and the combined with the previously generated data for B and D. Although spatial audio data for participant A was generated above for participant B, participant A now has a different spatial position and so the data for participant A data cannot be reused.

Box 1008 illustrates a sound positioning of the participants from the perspective of participant D. Participant B has the same position as in Box 1002 and 1006, and participant C has the same position as in Box 1002 and 1004. Thus, the spatial audio data previously generated for participants B and C may be reused in the construction of the spatial audio data packet stream to be sent to participant D. Only the spatial audio data for participant A needs to be generated and the combined with the previously generated data for B and C. Although spatial audio data for participant A was generated above for participant B in Box 1004 and 1006, participant A now has a different spatial position and so the data for participant A data cannot be reused from either of the previous configurations.

While FIG. 10 illustrates one possible approach to reducing the computational burden placed on the central group communication control module 222, persons skilled in the art will appreciate that any approach that duplicates the positions of certain participants with respect to other participants provides the opportunity for reduced processing through the reuse of previously generated spatial audio data.

Although the group communication control modules 222 and 308 have been described in the form of functional program modules for execution by the processor of data processing system, it will be understood by persons skilled in the art that these software modules may implemented by two or more submodules, and that the group communication control modules 222 and 308 may in turn be part of submodules of one or more larger functional program modules.

While the examples described herein refer mainly to simulate spatial sound in the form of binaural or transaural sound, it will be appreciated that the systems and methods described therein are also applicable to other types of simulated or synthesized spatial sound. Furthermore, although some of the examples described herein are in the context of a conference call, it will be appreciated that the methods for simulating spatial sound may be adapted for use in connection with any group voice communication session such as, for example, a group chat using push-to-talk (PTT) over cellular. Though not described herein, PTT implementations are well known in the art and the necessary modifications and adaptations for implementing the systems and methods of the application in the PTT environment would be understood to a person skilled in the art. Additionally, the systems and methods described herein may also be applied to other types of group communications sessions, such as video conference calls, video web chat sessions, netmeetings, etc.

While the present application is primarily described as a method, a person of ordinary skill in the art will understand that the present application is also directed to an apparatus for carrying out the disclosed method and including apparatus parts for performing each described method step, be it by way of hardware components, a computer programmed by appropriate software to enable the practice of the disclosed method, by any combination of the two, or in any other manner. Moreover, an article of manufacture for use with the apparatus, such as a pre-recorded storage device or other similar computer readable medium including program instructions recorded thereon, or a computer data signal carrying computer readable program instructions may direct an apparatus to facilitate the practice of the disclosed method. It is understood that such apparatus, articles of manufacture, and computer data signals also come within the scope of the present application.

The embodiments of the present application described above are intended to be examples only. Those of skill in the art may effect alterations, modifications and variations to the particular embodiments without departing from the intended scope of the present application. In particular, selected features from one or more of the above-described embodiments may be combined to create alternative embodiments not explicitly described, features suitable for such combinations being readily apparent to persons skilled in the art. The subject matter described herein in the recited claims intends to cover and embrace all suitable changes in technology.

## Claims

1. A system for providing simulated spatial sound on a wireless communication device (102), the wireless communication device (102) being one of two or more wireless communication devices engaged in a group voice communication session, the wireless communication device (102) comprising:
a processor (140) for controlling the operation of the wireless communication device (102);
a communications subsystem operatively connected to the processor (140) for communicating with the other wireless communication devices engaged in the group voice communication session;
a memory operatively connected to the processor (140);
an audio input device operatively connected to the processor (140);
a stereo audio output device operatively connected to the processor (140);
a control module (308) stored in the memory for execution by the processor (140) to facilitate spatial sound simulation, the control module (308) configuring the wireless communication device (102) to:
receive an audio input from a user of the wireless communication device (102);
generate audio data packets (700) from the audio input received from the user and transmit the audio data packets (700) other wireless communication devices engaged in the group voice communication session;
receive spatial audio data packets; and
reproduce the spatial audio data contained in the spatial audio data packets using the stereo audio output device.

2. The system of claim 1, wherein the spatial audio data is simulated binaural or transaural audio data generated from audio data packets (700) from one or more of the other wireless communications devices engaged in the group voice communication session by applying at least one spatial sound simulating algorithm to the audio data contained in the audio data packets (700) using a virtual spatial position associated with the respective wireless communications devices.

3. The system of claim 1 or claim 2, wherein the at least one spatial sound simulating algorithm comprises a pair of Head-Related Transfer Functions 'HRTFs'.

4. The system of claim 3, wherein the spatial audio data is simulated binaural audio data.

5. The system of any one of claims 1 to 4, wherein the wireless communication devices are coupled to a wireless communication network (200) and each wireless communication device (102) is configured to transmit audio data packets to others of the wireless communication devices over the wireless communication network (200).

6. The system of claim 5, wherein the control module (308) of the wireless communication device (102) configures the wireless communication device (102) to receive a spatial audio data stream from the wireless communications network (200), the spatial audio data steam comprising a stream of spatial audio data packets.

7. The system of claim 6, wherein the spatial audio data packets are received from a group communication control module (222) of the wireless communications network (200).

8. The system of any one of claims 1 to 7, wherein the audio data packets comprise digital monaural audio data.

9. The system of any one of claims 1 to 8, wherein the audio data packets (700) comprise at least an audio source identifier 'ID' (702) for identifying the respective audio data packet and an audio payload (706) comprising source audio data.

10. The system of any one of claims 1 to 9, wherein each audio data packet (700) further comprises audio parameters (704) comprising information for use in spatial sound simulation.

11. The system of claim 10, wherein the audio parameters (704) comprise configuration information about the spatial positions associated with the respective wireless communications devices.

12. The system of claim 9 or any of claim 10 or claim 11 when dependent on claim 9, wherein the audio source ID (702) of each audio data packet (700) is associated with the spatial position of the respective wireless communications devices engaged in the group voice communication session.

13. The system of any one of claims 1 to 12, wherein the group voice communication session is a conference call or group chat using push-to-talk 'PTT' over cellular.

14. The system of any one of claims 1 to 13, wherein the stereo audio output device is one or more of stereo speakers integrated in the wireless communication device (102), external stereo speakers connected to an output port of the wireless communication device (102), and stereo headphones connected to an output port of the wireless communication device (102).

15. The system of any one of claims 1 to 14, wherein the audio input device is a microphone integrated in the wireless communication device (102) or an external microphone coupled to an input port of the wireless communication device (102).

16. The system of any one of claims 5 to 12 or any one of claim 13 to 15 when dependent on claim 5, wherein the wireless communications network (200) further comprises:
a wireless network system (104) for communicating with the wireless communication device (102) through a wireless session using the communications subsystem of the wireless communication device (102);
a wireless network gateway module (210) connected to the wireless network system (104) for interfacing between a wireless portion of the wireless communications network (200) and a wired portion of the wireless communications network (200); and
a network provider system (212) connected to the wireless network gateway (210) and to at least one further network, the network provider system (212) having a processor and a memory connected to the processor, the network provider system (212) for facilitating communications with the wireless communication device (102),
the network provider system (212) running a central control module (222) resident in the memory for execution by the processor, the central control module (222) for facilitating the simulated spatial sound on the wireless communication device (102).

17. A method for providing simulated spatial sound on a wireless communication device (102), the wireless communication device (102) being one of two or more wireless communication devices engaged in a group voice communication session, the method comprising the steps of:
determining a number of participants in the group voice communication session;
for each of the participants, determining a virtual spatial position for each of the other participants in the group voice communication session;
for each of the participants, generating simulated spatial audio data from source audio data of the other participants in the group voice communication session and the virtual spatial position determined for the respective participant using a spatial sound simulating algorithm; and
reproducing the simulated spatial audio data using a stereo audio output device of the wireless communication device (102).

18. The method of claim 17, wherein the spatial audio data is simulated binaural or transaural audio data generated from audio data from one or more of the other participants in the group voice communication session, the generating comprising applying at least one spatial sound simulating algorithm to the audio data using the virtual spatial position determined for the respective participant.

19. The method of claim 18, wherein the at least one spatial sound simulating algorithm comprises a pair of Head-Related Transform Functions 'HRTFs'.

20. The method of claim 19, wherein the spatial audio data is simulated binaural audio data.

21. The method of any one of claims 17 to 20, further comprising the steps of:
determining if the number of participants has changed; and
if the number of participants in the conference call has changed, adjusting the virtual spatial positions for each of the other participants in the group voice communication session.

22. The method of any one of claims 17 to 21, wherein the wireless communication devices engaged in the group voice communication session are coupled to a wireless communication network (200).

23. The method of claim 22, further comprising the steps of:
sending the simulated spatial audio data from a group communication control module (222) in the wireless communications network (200) to the wireless communication device (102); and
receiving the simulated spatial audio data on the wireless communication device (102).

24. The method of any one of claims 17 to 23, wherein if there are three or more participants in the group voice communication session, the virtual spatial positions determined for at least some of the other participants in the group voice communication session are the same for at least some of the participants, thereby allowing the reuse of previously generated simulated spatial audio data.

25. The method of any one of claims 17 to 24, wherein the virtual spatial positions are based on a two-dimensional (2D) or three-dimensional (3D) coordinate system.

26. The method of any one of claims 17 to 25, wherein the virtual spatial positions are based on a 3D coordinate system.

27. The method of any one of claims 17 to 26, wherein the group voice communication session is a conference call or group chat using push-to-talk 'PTT' over cellular.

28. A computer readable medium storing program instructions executable by a processor of a computing system for causing said computing system to perform the method of any one of claims 17 to 27.
